# FASCICULE DE BREVET EUROPEEN

(11) **EP 3 423 311 B1**
(45) Date de publication et mention de la délivrance du brevet: **08.04.2020**
(21) Numéro de dépôt: 17711252.1
(22) Date de dépôt: 23.02.2017
(51) Int. Cl.: B60R 16/02, B60J 5/10, H02G 3/04

(54) **AGENCEMENT D'UN ENSEMBLE DE GAINES DE PROTECTION SUR UN VÉHICULE AUTOMOBILE**
ANORDNUNG EINER GRUPPE KABELSCHÜTZHÜLLEN AUF EINEM KRAFTFAHRZEUG
ARRANGEMENT OF A GROUP OF PROTECTIVE SHEATHES ON A MOTOR VEHICLE

(30) Priorité: 29.02.2016 FR 1651661
(43) Date de publication de la demande: 09.01.2019
(73) Titulaire: PSA Automobiles S.A., 78300 Poissy (FR)
(72) Inventeur: FERON, Teddy, 25200 Montbeliard (FR)
(86) Numéro de dépôt international: PCT/FR2017/050401
(87) Numéro de publication internationale: WO 2017/149224

(56) Documents cités:
- EP-A1- 0 891 897
- EP-A1- 1 375 259
- JP-A- 2014 155 236
- US-A1- 2002 179 312
- Anonymous: "Zurück im Dienst: Opel Astra Sports Tourer - Autophorie.de", , 12 septembre 2015 (2015-09-12), pages 1-4, XP055310749, Extrait de l'Internet: URL:http://autophorie.de/2015/09/12/opel-a stra-k-sports-tourer/ [extrait le 2016-10-14]

## Description

La présente invention concerne de manière générale les gaines de protection, désignées également par fourreaux, et concerne plus particulièrement un agencement de gaines de protection montées sur un véhicule automobile.

Il est connu dans l'art antérieur des gaines de protection flexibles destinées à assurer une protection étanche et flexible entre une caisse d'un véhicule et un élément pouvant être mobile par rapport à cette caisse. De manière générale, ces gaines sont de forme essentiellement cylindriques souples, généralement annelées, fixées à une extrémité, à la caisse du véhicule et, à l'autre extrémité, à un ouvrant d'un véhicule (porte, volet de coffre, ...). Elles assurent la protection d'un faisceau de fils électriques et/ou d'un tuyau de passage de liquide, quand l'ouvrant est un volet de coffre disposant d'une vitre (ou lunette) arrière et ce, en étant aptes à accompagner les mouvements d'ouverture et de fermeture de l'ouvrant sans détérioration ni de la gaine ni du faisceau et/ou du tuyau.

S'agissant plus particulièrement d'un volet de coffre comportant une vitre ou lunette arrière, il est nécessaire de prévoir le passage de câbles d'antennes destinés à relier les antennes sérigraphiées sur la vitre aux systèmes audios du véhicule. Il est également nécessaire de prévoir le passage de fils conducteurs électriques, réunis en faisceau, pour alimenter les dispositifs consommateurs d'électricité embarqués sur le volet (feux de signalisation arrière, résistance chauffante pour le désembuage de la vitre, mécanisme d'essuyage et dispositif de lavage de la vitre et diverses commandes et moteur permettant l'ouverture du volet).

Il est également nécessaire de prévoir le passage d'un tuyau d'eau pour alimenter en liquide lave-glace le dispositif de lavage de la vitre.

Au vu de la quantité de fils (câbles d'antennes et faisceau) et du tuyau à faire passer entre la caisse et le volet, il est devenu nécessaire de répartir les fils, faisceau et le tuyau dans deux gaines distinctes.

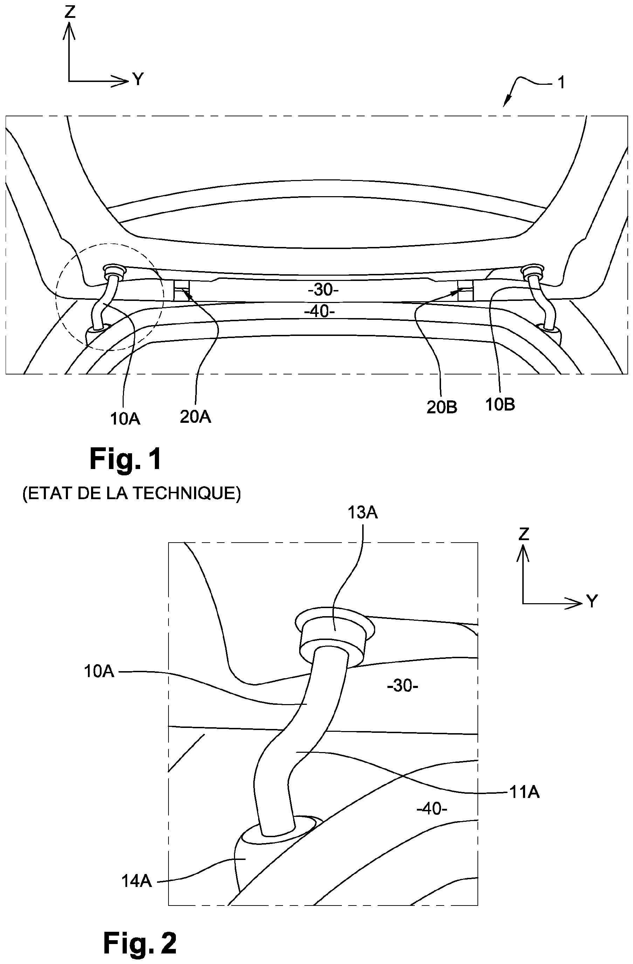

Comme illustré sur la figure 1, il est connu de positionner deux gaines 10A et 10B respectivement de part et d'autre et à l'extérieur des deux charnières d'articulation 20A et 20B du volet 30 sur la caisse 40 d'un véhicule automobile 1.

La figure 2 illustre en détail une 10A des gaines 10A et 10B de l'agencement de la figure 1 (zone cerclée de la figure 1).

La partie principale de la gaine 10A présente la forme d'un soufflet 11A constitué d'un empilement de plusieurs spires annelées de section générale circulaire, adjacentes 12 et solidaires entre elles, qui sont aptes à se comprimer à chaque fermeture du volet 30 et à s'étirer à chaque ouverture du volet 30.

Les extrémités du soufflet 11 comportent respectivement un insert 13 et 14 en plastique permettent la fixation de la gaine 10A par clipage sur des lèvres étanches correspondantes appartenant respectivement au volet 30 et à la caisse 40.

Les gaines 10A et 10B sont soumises à des contraintes d'utilisation sévères qui peuvent conduire à la longue à des déchirements au niveau des spires 12A du soufflet 11A et/ou à l'interface entre les inserts 13A et 14A en plastique et le soufflet 11A et/ou par l'usure voire la rupture des fils ou du tuyau passant dans la gaine 10A.

Les frottements répétés dus au déplacement des fils à l'intérieur des gaines 10A et 10B lors des étirements/compressions (efforts en traction) répété des gaines 10A et 10B à chaque ouverture/fermeture du volet de coffre 30 en sont les principales causes.

Il a été démontré qu'un tel agencement ne permettait pas de garantir l'intégrité des gaines 10A et 10B et leur contenant au-delà d'un nombre maximum d'ouvertures/fermetures du volet 30.

La présente invention vise à résoudre ce problème en proposant un agencement de gaines permettant de passer ce nombre maximum et répondre ainsi à des exigences plus sévères notamment pour les véhicules servant au transport individuel de personnes tels que des taxis, VTC ... et qui par leur destination, sont amenés à solliciter plus fréquemment les volets de coffre pour le chargement/déchargement des bagages.

A cet effet, un premier objet de l'invention concerne un agencement d'un ensemble de deux gaines de protection reliant la caisse d'un véhicule à un ouvrant dudit véhicule articulé sur ladite caisse au moyens d'au moins deux charnières disposées à distance l'une de l'autre sur la caisse, chacune des gaines comportant une partie centrale flexible reliant respectivement les première et deuxièmes extrémités de chacune des gaines.

Cet agencement est caractérisé en ce que les extrémités des gaines fixées sur la caisse, sont adjacentes entre elles, alignées sur l'axe de pivotement du volet sur la caisse, passant par les deux charnières, et en ce qu'elles sont centrées entre les charnières.

Selon une caractéristique, les deux gaines sont identiques et agencées de manière symétrique par rapport au plan médian vertical du véhicule.

Selon une autre caractéristique, la partie centrale des gaines est constituée d'un empilement de spires plates de section générale rectangulaire, adjacentes et solidaire en elles ; chaque spire étant décalée de sa spire adjacente suivant sa petite dimension.

Avantageusement, la partie centrale et les extrémités de la gaine sont en matériau flexible. De cette manière, la gaine est facile à manipuler.

De manière avantageuse, la partie centrale et les extrémités de la gaine sont en caoutchouc ou en plastique.

Selon une autre caractéristique, les gaines sont agencées en forme de « V ».

Un second objet de l'invention est véhicule automobile comportant un volet de coffre comportant diverses commandes et moteur permettant l'ouverture du volet, des dispositifs de désembuage, de lavage et d'essuyage d'une vitre du volet, des antennes sérigraphiées sur la vitre, et comportant un agencement d'un ensemble de gaines tel que décrit ci-dessus, dans lequel une des gaines assure le passage des câbles des antennes et l'autre gaine assure le passage d'un faisceau de fils d'alimentation électrique d'au moins les diverses commandes et moteur permettant l'ouverture du volet, des dispositifs de désembuage, de lavage et d'essuyage et d'un tuyau de liquide lave-vitre, entre le volet de coffre et la caisse du véhicule.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1, déjà décrite, représente un agencement d'une paire de gaines de l'état de la technique reliant le volet de coffre d'un véhicule avec la partie arrière de la caisse dudit véhicule, volet de coffre ouvert ;
- la figure 2, déjà décrite, représente une vue de détail de la zone cerclée de la figure 1, illustrant une des gaines reliant le volet de coffre d'un véhicule avec la partie arrière de la caisse dudit véhicule ;
- la figure 3 représente un agencement de gaines selon l'invention reliant le volet de coffre d'un véhicule avec la partie arrière de la caisse dudit véhicule, volet de coffre ouvert ;
- la figure 4 représente schématiquement, l'alignement des gaines de l'agencement selon l'invention avec les charnières d'articulation du volet sur la caisse du véhicule selon une vue de face ; et
- la figure 5 représente schématiquement, l'alignement des gaines de le l'agencement selon l'invention avec les charnières d'articulation du volet sur la caisse du véhicule selon une vue de dessus.

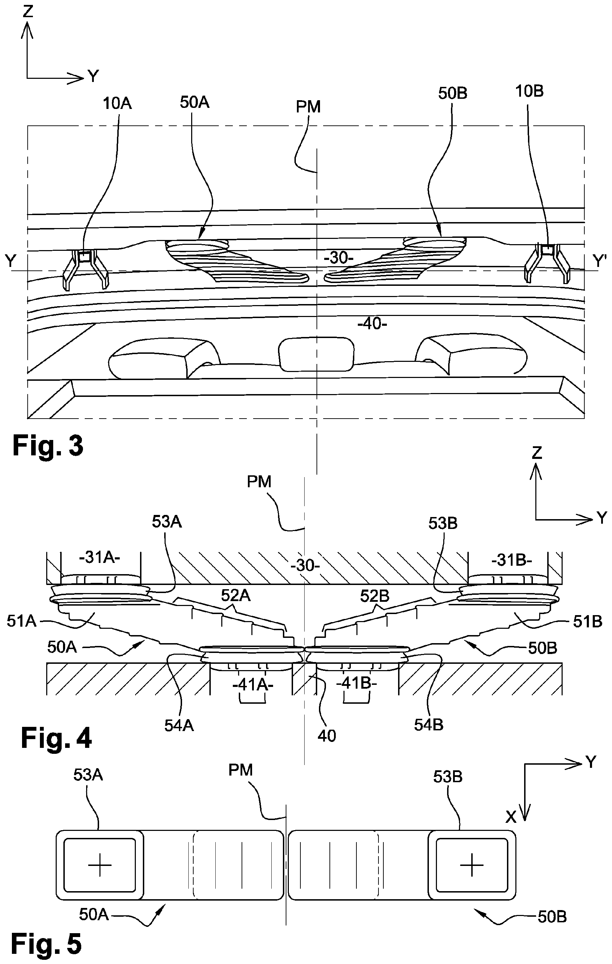

La figure 3 représente une vue d'ensemble d'un agencement d'une paire de gaines de protection 50A et 50B positionnée entre le volet de coffre 30 et la caisse 40 du véhicule 1 et telle que visible par un observateur placé à l'arrière du véhicule et regardant vers l'intérieur du véhicule, volet de coffre 30 ouvert.

L'ensemble des deux gaines ainsi assemblées entre la caisse et le volet forme un « V » vu par ce même observateur.

Les figures 4 et 5 représentent respectivement une vue de détail ciblée sur la paire de gaines 50A et 50B selon une vue de face et une vue de de dessus.

Chaque gaine 50A et 50B comporte une partie centrale flexible 51A et 51B reliant deux extrémités de la gaine 50A et 50B, équipées respectivement d'inserts 53A, 54A et 53B, 54B. Les inserts 54A et 54B fixent les gaines 50A et 50B sur la caisse 40 du véhicule 1 et les inserts 53A et 53B fixent les gaines 50A et 50B sur le volet de coffre 30.

Des ouvertures 31A, 31B, 41A et 41B sont aménagées respectivement dans le volet 30 et la caisse 40 de manière à recevoir de manière étanche les inserts correspondants 53A, 53B, 54A et 54B des gaines 50A et 50B. Les dimensions de ces ouvertures 31A, 31B, 41A et 41B sont adaptées pour permettre le passage du volume de câbles, tuyau et faisceau à faire passer lors du montage sur ligne en usine.

La répartition de ce volume sur deux gaines identiques avec une différenciation par les éléments passant au travers des gaines, facilite le montage et le référencement des pièces puisqu'une seule référence de gaine est nécessaire.

Les gaines 50A et 50B sont donc identiques et montées symétriquement par rapport au plan de symétrie vertical (ou plan médian) PM du véhicule 1.

Elles sont adjacentes côté caisse 40 et s'écartent progressivement sur une longueur déterminée suffisante pour permettre le débattement du volet 30 entre sa position ouverte et sa position fermée et inversement.

Pour ce faire, la partie centrale 51A, respectivement 51B, est en matériau flexible, par exemple du caoutchouc ou du plastique, ou du même genre.

Chaque partie centrale 51A, 51B est constituée d'un empilement de spires plates 52A, 52B de section générale rectangulaire, adjacentes et solidaires entre elles. Chaque spire 52A, 52B est décalée latéralement en Y par rapport à la précédente suivant sa petite dimension qui elle s'étend en X (direction de l'axe longitudinal du véhicule qui est perpendiculaire au référentiel YZ des figures) et dans lequel s'étend le plan de symétrie vertical PM du véhicule 1.

Les extrémités des gaines 50A et 50B fixées sur la caisse 40, sont par ailleurs alignées sur l'axe de pivotement du volet 30 autour de la caisse 40 ; axe de pivotement YY' passant par les charnières 10A et 10B.

Avec un tel agencement des gaines 50A, 50B telles que décrites ci-dessus, les gaines 50A, 50B ne sont plus soumises à des efforts en traction (étirement/compression) comme dans le mode de réalisation de l'état de la technique illustré aux figures 1 et 2.

Elles subissent des efforts en torsion mais qui sont limités du fait de l'alignement des extrémités des gaines côté caisse avec l'axe de pivotement des charnières YY' autrement dit l'axe de pivotement du volet sur la caisse.

La limitation de la déformation des gaines réduit ainsi les risques de déchirement de la gaine ainsi que l'usure des câbles, faisceau et tuyau passant à l'intérieur des gaines 50A et 50B.

Ainsi, l'agencement des gaines selon l'invention permet de repousser la limite d'endurance à 50 000 ouvertures/fermetures du volet, ce qui est supérieur à la limite obtenue avec un agencement selon l'état de la technique.

## Revendications

1. Agencement d'un ensemble de deux gaines de protection (50A, 50B) reliant la caisse (40) d'un véhicule (1) à un ouvrant (30) dudit véhicule (1) articulé sur ladite caisse (40) au moyens d'au moins deux charnières (10A, 10B) disposées à distance l'une de l'autre sur la caisse (40), chacune des gaines (50A, 50B) comportant une partie centrale flexible (51A, 51B) reliant respectivement les première et deuxièmes extrémités (53A, 54A, 53B, 54B) de chacune des gaines (50A, 50B) ; les extrémités (54A, 54B) des gaines (50A, 50B) fixées sur la caisse (40) étant adjacentes entre elles, alignées sur l'axe de pivotement (YY') du volet (30) sur la caisse (40), passant par les deux charnières (10A, 10B), et centrées entre les charnières (10A, 10B) ; les deux gaines (50A, 50B) étant identiques et agencées de manière symétrique par rapport au plan médian vertical du véhicule (1), **caractérisé en ce que** la partie centrale (51A, 51 B) des gaines (50A, 50B) est constituée d'un empilement de spires plates (52A, 52B) de section générale rectangulaire, adjacentes et solidaire en elles ; chaque spire (52A, 52B) étant décalée de sa spire adjacente suivant sa petite dimension.

2. Agencement selon l'une des revendications précédentes, **caractérisé en ce que** les parties centrales (51A, 51 B) et les extrémités (53A, 54A, 53B, 54B) des gaines (50A, 50B) sont en matériau flexible.

3. Agencement selon la revendication précédente, **caractérisé en ce que** les parties centrales (51A, 51 B) et les extrémités (53A, 54A, 53B, 54B) des gaines (50A, 50B) sont en caoutchouc ou en plastique.

4. Agencement selon l'une des revendications précédentes, **caractérisé en ce que** les gaines (50A, 50B) sont agencées en forme de « V ».

5. Véhicule automobile (1) comportant un volet de coffre (30) comportant diverses commandes et moteur permettant l'ouverture du volet, des dispositifs de désembuage, de lavage et d'essuyage d'une vitre du volet, des antennes sérigraphiées sur la vitre, et comportant un agencement d'un ensemble de gaines selon l'une des revendications précédentes dans lequel une des gaines assure le passage des câbles des antennes et l'autre gaine assure le passage d'un faisceau de fils d'alimentation électrique d'au moins les diverses commandes et moteur permettant l'ouverture du volet, des dispositifs de désembuage, de lavage et d'essuyage et d'un tuyau de liquide lave-vitre, entre le volet de coffre (30) et la caisse (40) du véhicule (1).

## Patentansprüche

1. Anordnung eines Satzes von zwei Schutzhüllen (50A, 50B), welche die Karosserie (40) eines Kraftfahrzeugs (1) mit einer Öffnung (30) des Kraftfahrzeugs (1) verbindet, die an der Karosserie (40) mittels mindestens zweier Scharniere (10A, 10B) angelenkt ist, die in einem Abstand voneinander auf der Karosserie (40) angeordnet sind, wobei jede der Hüllen (50A, 50B) einen flexiblen Mittelabschnitt (51A, 51B) aufweist, der jeweils das erste und zweite Ende (53A, 54A, 53B, 54B) jeder der Hüllen (50A, 50B) verbindet; wobei die Enden (54A, 54B) der an der Karosserie (40) befestigten Hüllen (50A, 50B) angrenzend zueinander sind, auf der Schwenkachse (YY') der Klappe (30) an der Karosserie (40) ausgerichtet sind, durch die beiden Scharniere (10A, 10B) verlaufen und zwischen den Scharnieren (10A, 10B) zentriert sind; wobei die beiden Hüllen (50A, 50B) identisch und symmetrisch in Bezug auf die vertikale Mittelebene des Kraftfahrzeugs (1) angeordnet sind, **dadurch gekennzeichnet, dass** der Mittelabschnitt (51A, 51B) der Hüllen (50A, 50B) aus einem Stapel von flachen Windungen (52A, 52B) mit allgemein rechteckigem Querschnitt besteht, die aneinander angrenzen und fest miteinander verbunden sind; wobei jede Windung (52A, 52B) von ihrer angrenzenden Windung entlang ihrer kleinen Abmessung versetzt ist.

2. Anordnung nach einem der vorstehenden Ansprüche, **dadurch gekennzeichnet, dass** die Mittelabschnitte (51A, 51B) und die Enden (53A, 54A, 53B, 54B) der Hüllen (50A, 50B) aus flexiblem Material hergestellt sind.

3. Anordnung nach dem vorstehenden Anspruch, **dadurch gekennzeichnet, dass** die Mittelabschnitte (51A, 51B) und die Enden (53A, 54A, 53B, 54B) der Hüllen (50A, 50B) aus Gummi oder Kunststoff hergestellt sind.

4. Anordnung nach einem der vorstehenden Ansprüche, **dadurch gekennzeichnet, dass** die Hüllen (50A, 50B) in einer "V"-Form angeordnet sind.

5. Kraftfahrzeug (1) mit einer Kofferraumklappe (30), die verschiedene Steuerungen und einen Motor, der das Öffnen der Klappe ermöglicht, Vorrichtungen zum Entnebeln, Waschen und Wischen einer Scheibe der Klappe, serigraphierte Antennen auf der Scheibe aufweist, und die eine Anordnung eines Satzes von Hüllen nach einem der vorstehenden Ansprüche aufweist, wobei eine der Hüllen den Durchgang der Kabel der Antennen sicherstellt und die andere Hülle den Durchgang eines Bündels von elektrischen Versorgungsdrähten mindestens der verschiedenen Steuerungen und des Motors, die das Öffnen der Klappe, der Vorrichtungen zum Entnebeln, Waschen und Wischen, und einer Leitung für Scheibenwaschflüssigkeit zwischen der Kofferraumklappe (30) und der Karosserie (40) des Kraftfahrzeugs (1) ermöglichen, sicherstellt.

## Claims

1. Arrangement of a set of two protective sheaths (50A, 50B) connecting the bodyshell (40) of a vehicle (1) to an opening leaf (30) of said vehicle (1) articulated to said bodyshell (40) by means of at least two hinges (10A, 10B) arranges some distance apart on the bodyshell (40), with each one of the sheaths (50A, 50B) including a flexible central part (51A, 51B) respectively connecting the first and second ends (53A, 54A, 53B, 54B) of each one of the sheaths (50A, 50B) ; with the ends (54A, 54B) of the sheaths (50A, 50B) fixed to the bodyshell (40) being adjacent to one another, aligned on the axis of pivoting (YY') of the panel (30) on the bodyshell (40), passing through the two hinges (10A, 10B), and centred between the hinges (10A, 10B); with the two sheaths (50A, 50B) being identical and arranged symmetrically in relation to the vertical median plane of the vehicle (1), **characterised in that** the central part (51A, 51B) of the sheaths (50A, 50B) is formed from a stack of flat windings (52A, 52B) with a generally rectangular section, adjacent and integral with one another; with each winding (52A, 52B) being offset from its adjacent winding according to the small dimension thereof.

2. Arrangement according to one of the preceding claims, **characterised in that** the central parts (51A, 51B) and the ends (53A, 54A, 53B, 54B) of the sheaths (50A, 50B) are made from flexible material.

3. Arrangement according to the preceding claim, **characterised in that** the central parts (51A, 51B) and the ends (53A, 54A, 53B, 54B) of the sheaths (50A, 50B) are made from rubber or plastic.

4. Arrangement according to one of the preceding claims, **characterised in that** the sheaths (50A, 50B) are arranged in the shape of a "V".

5. Motor vehicle (1) comprising a boot panel (30) including various controls and a motor allowing for the opening of the panel, devices for demisting, washing and wiping a window of the panel, antennas screen-printed to the window, and including an arrangement of a set of sheaths according to one of the preceding claims wherein one of the sheaths provides the passing of the cables of the antennas and the other sheath provides the passage of an electric power wire bundle of at least the various controls and motor allowing for the opening of the panel, devices for demisting , washing and wiping and a hose of window-washing fluid, between the boot panel (30) and the bodyshell (40) of the vehicle (1).
